# EUROPEAN PATENT SPECIFICATION

(11) **EP 0 569 225 B1**
(45) Date of publication and mention of the grant of the patent: **05.08.1998**
(21) Application number: 93303483.7
(22) Date of filing: 05.05.1993
(51) Int. Cl.: H04N 7/22, H04B 10/20

(54) **Picture image distributing apparatus provided within passenger moving vehicle**
Bildverteilanlage in einem Fahrzeug mit Insassen
Appareil pour la distribution d'image dans un véhicule transportant des passagers

(30) Priority: 08.05.1992 JP 116317/92
(43) Date of publication of application: 10.11.1993
(60) Divisional application: 97103840.1
(73) Proprietor: MATSUSHITA ELECTRIC INDUSTRIAL CO., LTD., Kadoma-shi, Osaka-fu, 571 (JP)
(72) Inventor: Utsumi, Kuniaki, Hirakata-shi, Osaka-fu (JP); Nakata, Hiroaki, Hirakata-shi, Osaka-fu (JP); Morikura, Susumu, Hirakata-shi, Osaka-fu (JP); Yamamoto, Hiroaki, Higashiosaka-shi, Osaka-fu (JP); Maeda, Kazuki, Sakai-shi, Osaka-fu (JP); Fuse, Masaru, Toyonaka-shi, Osaka-fu (JP)
(74) Representative: Rackham, Stephen Neil

(56) References cited:
- EP-A- 0 031 014
- EP-A- 0 096 327
- WO-A-91/15927
- CH-A- 671 845
- FR-A- 2 652 701
- MILITARY COMMUNICATIONS IN A CHANGING WORLD MILCOM '91, IEEE vol. 3 , November 1991 , US, NEW YORK pages 1081 - 1085 XP273854 A.R. KLINE 'FIBER OPTIC DISTRIBUTION SYSTEM FOR WIDEBAND, HIGH PERFORMANCE VIDEO'
- INTERNATIONAL JOURNAL OF DIGITAL AND ANALOG COMMUNICATTION SYSTEMS vol. 3, no. 4 , October 1990 , UK pages 333 - 339 D.R.HUBER ET AL. 'OPTICAL AMPLIFIERS FOR VIDEO DISTRIBUTION'
- ELECTRONICS LETTERS vol. 26, no. 14 , 5 June 1990 , ENAGE GB pages 1013 - 1015 XP107140 M.-S. KAO ET AL 'COHERENT OPTICAL RING USING COMMON LOCAL OSCILLATOR'
- ELECTRONICS LETTERS vol. 27, no. 23 , 7 November 1991 , ENAGE GB pages 2098 - 2100 XP268333 R. OLSHANSKY 'MULTIGIGABIT PER SECOND SUBCARRIER MULTIPLEXED OPTICAL FIBRE RING NETWORK'
- IEEE COMMUNICATIONS MAGAZINE vol. 29, no. 6 , June 1991 , PISCATAWAY, NJ US pages 51 - 58 XP235725 J. SOSNOSKY ET AL 'SONET RING APPLICATIONS FOR SURVIVABLE FIBER LOOP NETWORKS'

## Description

The present invention generally relates to a picture image distributing apparatus provided within a passenger moving vehicle for distributing to the respective passenger seats the multichannel picture image signals within the passenger moving vehicle.

The conventional picture image distributing apparatus provided within a passenger moving vehicle is one using the same coaxial cables as in, for example, CATV. The distributing operation of the signals is effected by the taking out operation of the signals where necessary by a tapping system from the coaxial cable.

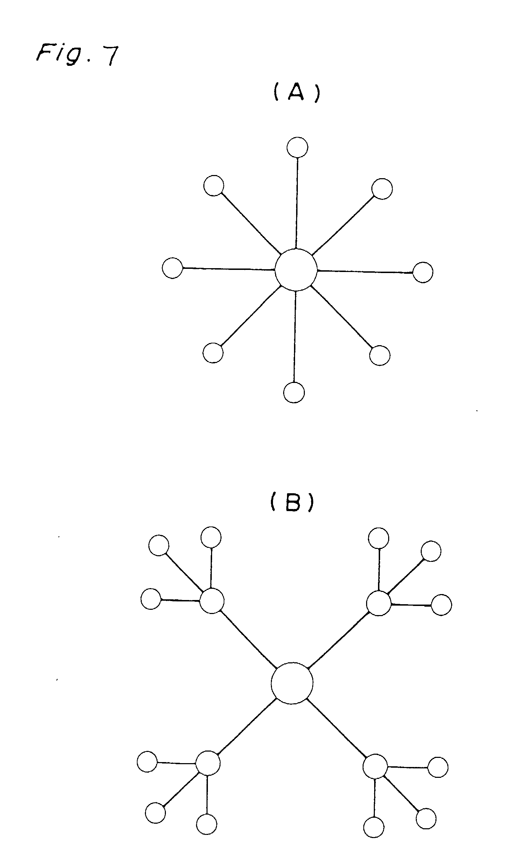

A network construction of distributing optical signals with the use of optical fibers generally uses topology of a star type using an optical branching unit of such equal distribution as shown in Fig. 7 (A), of a double star type or of a multistage star type as in Fig. 7 (B). This is because the loss as the whole network which becomes a problem in the optical signal distribution can be reduced as much as possible as the optical branching unit of the equal distribution is the least in the excessive loss. Therefore, the number of all the distributions can be made as many as possible.

As to the prior art disclosing a signal distribution of optical fiber there is, for instance, a paper of "OPTICAL AMPLIFIERS FOR VIDEO DISTRIBUTION" written by D. R. HUBER and J. B. GLAAB, and issued on INTERNATIONAL JOURNAL OF DIGITAL AND ANALOG COMMUNICATION SYSTEMS, VOL. 3, pp. 333 - 339, (1990).

In a picture image distributing apparatus provided within a passenger moving vehicle by a tapping system using such coaxial cables as in the above description, electromagnetic interferences are easy to, not only, receive from the electromagnetic environment inferior within the passenger moving vehicle, but also, to generate the electromagnetic interferences with respect to the other appliances, with a problem that the influences upon the signals by differences and variations in the earth electric potential are unavoidable.

In order to avoid such electromagnetic task, it is effective to use the optical fibers as a transmission path. In the network construction of a star type or a multistage star type, the number of the core wires of the optical fibers to be laid in the longitudinal direction becomes more within the passenger moving vehicle of such narrow construction as airplane or train, and especially becomes more near the head end portion. Generally, the passenger moving vehicle of such a narrow construction as the airplane and the train is narrow therein in the conduit lines for the transmission path use or in the space for them, with a large problem that the optical fibers of many cores are laid. Weight increases, and wirings become complicated. There is a problem that it takes more time to detect the trouble locations at the breaks of the optical fibers. Although the optical fibers are required to be connected with the optical connectors so as to be disengaged halfway from on the transmission path for the maintenance, the number of the optical connections become extremely numerous, and the space for them become larger. When the optical fibers are connected again after the disconnection thereof, with a problem that the discrimination among the optical fibers is hard to effect.

According to the present invention, a picture image distributing apparatus provided within a passenger moving vehicle comprising a head end portion related to picture image signals, and outputting electric signals multiplexed in frequency, an electric optical converting portion for converting into optical signals the electric signals from the above described head end portion, an optical amplifying portion for optically amplifying the optical signals from the above described electric optical converting portion, one optical fiber transmission path for transmitting the optical signals from the above described optical amplifying portion, connected in series with a plurality of optical branching units of non-equal distribution for branching one portion of the optical power of the optical signals, and also, connected in series with an optical branching unit of equal distribution or non-equal distribution for branching the optical power at a final point, a plurality of optical electric converting portions for receiving the optical signals branched at the final point or along the above described optical fiber transmission path, and a passenger seat picture image receiving terminal connected electrically with the above described respective optical electric converting portions, and receiving the electric signals from the optical electric converting portions.

Further aspects of the invention are set out in the dependent claims.

In the invention defined in claim 1, the head end portion is related to picture image signals and outputs the electric signals multiplexed in frequency. The electric optical converting portion converts the electric signals from the head end portion into the optical signals. The optical amplifying portion optically amplifies the optical signals from the electric optical converting portion. One optical fiber transmission path transmits the optical signals from the optical amplifying portion, and is connected in column with a plurality of optical branching units of the non-equal distribution for halfway branching one portion of the optical power of the optical signals, and also, is connected with an optical branching units of equal distribution or non-equal distribution for branching the optical power in the final point. A plurality of optical electric converting portions receives the optical signals branched in the final point or halfway on the optical fiber transmission path so as to convert them into the electric signals. A plurality of passenger seat picture image receiving terminals are connected electrically by a plurality respectively with the respective optical electric converting portions, and receive the electric signals from the optical electric converting portions.

In the present invention the picture image signals of a multichannel can be distributed to the respective passenger seats efficiently within the passenger moving vehicle of such narrow construction as in the airplane and the train. Therefore, the less number of the optical connectors for maintenance use will do, the type of the branching units can be reduced, the wiring amount can be also reduced, thus resulting in lighter amount. Further, the signal distribution can be effected in much more amount. As the number of the optical connectors and the type of the branching units can be reduced, thus resulting in lower cost. Higher reliability, easier maintenance and repairs are provided.

Particular embodiments of the present invention will now be described with reference to the accompanying drawings, in which:-
Fig. 1 is a block diagram showing the construction of a picture image distributing apparatus provided within a passenger moving vehicle in a first embodiment of the present invention;
Fig. 2 is an illustrating view of a concrete embodiment of the optical branches of an optical fiber transmission path in the first embodiment of the present invention;
Fig. 3 is an illustrating view in the other concrete embodiment of the optical branches of an optical fiber transmission path in the first embodiment of the present invention;
Fig. 4 is a block diagram showing the construction of a picture image distributing apparatus provided within a passenger moving vehicle in a second embodiment of the present invention;
Fig. 5 is a block diagram showing the construction of a picture image distributing apparatus provided within a passenger moving vehicle in a third embodiment of the present invention;
Fig. 6 is a block diagram showing the construction of a picture image distributing apparatus provided within a passenger moving vehicle in a fourth embodiment of the present invention; and,
Fig. 7 is a topology view showing the network construction in the construction example of the conventional picture image distributing apparatus provided within the passenger moving vehicle.

Before the description of the present invention proceeds, it is to be noted that like parts are designated by like reference numerals throughout the accompanying drawings.

### (Embodiment 1)

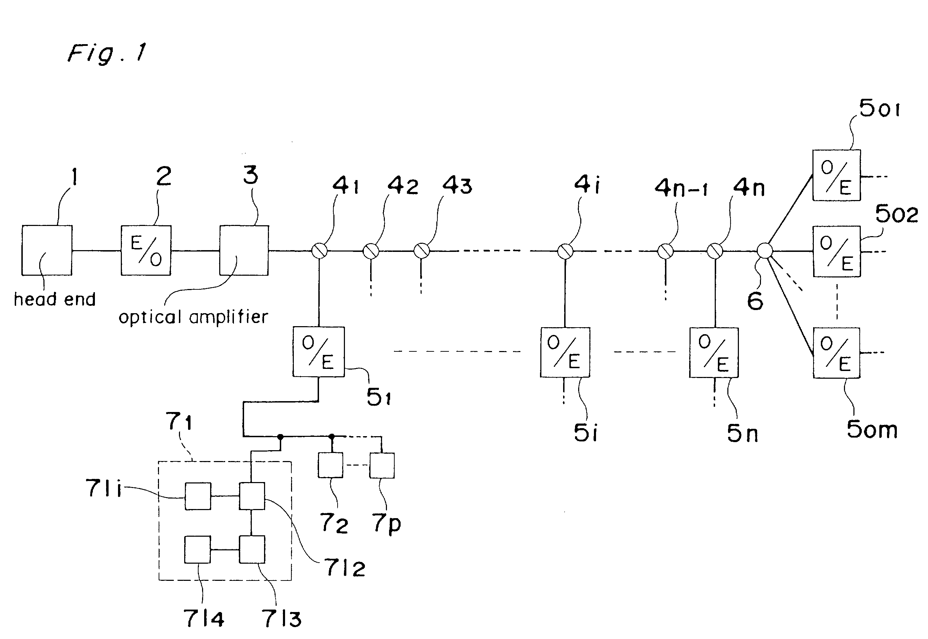

Fig. 1 is a block diagram of a picture image distributing apparatus provided within a passenger moving vehicle in an embodiment 1 of the present invention. The picture image distributing apparatus provided within the passenger moving vehicle is provided with a head end portion 1, an electric optical converting portion (hereinafter referred to as "E/O portion") 2, an optical amplifying portion 3, an optical taps 4₁ through 4ₙ as optical branching units, optical electric converting portions (hereinafter referred to as "O/E portion) 5₁ through 5ₙ, 5ₒ₁ through 5ₒₘ, an optical branching unit 6, a passenger seat picture image terminals 7₁ through 7ₚ. The passenger seat picture image receiving terminals 7₁ through 7ₚ are respectively connected even to the respective O/E portions 5₂ through 5ₙ, 5ₒ₁, through 5ₒₘ except for the O/E portion 5₁ although the drawing is omitted. Each of the passenger seat picture image receiving terminals 7₁ is provided with a selecting channel operation portion for passenger 71₁ as a man-machine interface, a tuning portion 71₂ for tuning selectively the desired channel with the output electric signals of O/E portion 5₁ by controlling of the selecting channel operation portion for passenger 71₁, a demodulation portion 71₃ for demodulating the signals of channel selected in tuning, and a picture image displaying portion 71₄ for displaying the demodulated picture image signals.

The head end portion 1 relates to the picture image signals so as to output electric signals multiplexed in frequency. The E/O portion 2 converts into optical signals the electric signals outputted from the head end portion 1. The optical amplifying portion 3 optically amplifies the optical signals outputted from the E/O portion 2. The optical taps 4₁ through 4ₙ branches the light into the non-equal distribution. The O/E portions 5₁ through 5ₙ, 5ₒ₁ through 5ₒₘ receive the optical signals from the optical taps 4₁ through 4ₙ or the optical branching unit 6 so as to convert them into electric signals. The optical branching unit 6 branches the light into the equal distribution. The passenger seat picture image receiving terminals 7₁ through 7ₚ receive the electric signals from the O/E portions 5₁ through 5ₙ, 5ₒ₁ through 5ₒₘ. An optical fiber transmission path is composed with the optical fibers being connected among the optical amplifying portion 3 and the optical taps 4₁ through 4ₙ, the optical branching unit 6 and the O/E portions 5₁ through 5ₙ, 5ₒ₁ through 5ₒₘ.

The operation will be described hereinafter. The electric signals from the head end portion 1 are converted into the optical signals by the E/O portion 2, are optically amplified by the optical amplifying portion 3, and outputted into the optical fiber transmission path. The optical signals branched by the optical taps 4₁ through 4ₙ are received respectively by the O/E portions 5₁ through 5ₙ, and are converted into electric signals, namely, signals equivalent to the output signals from the head end portion 1. The larger signal of the output optical signals from the optical tap 4ₙ is equally distributed by the optical distributing unit 6, is received respectively by the O/E portions 5ₒ₁ through 5ₒₘ, and is converted into the electric signals. The passenger seat picture image receiving terminals 7₁ through 7ₚ connected to the respective O/E portions 5₁ through 5ₙ, 5ₒ₁ through 5ₒₘ receive the electric signals from the O/E portions 5₁ through 5ₙ, 5ₒ₁ through 5ₒₘ so as to reproduce the picture images.

In the side of passenger seat picture receiving terminals 7₁, a passenger operates the selecting channel operation portion 71₁ to select the picture image program of channel to be received, by which operation the selecting channel operation portion 71₁ is controlled by the inputted signals the tuning portion 71₂ so as to selectively tune the desired channel from the output electric signals of the O/E portion 5₁. The channel signal selected in tuning by the tuning portion 71₂ is demodulated with the demodulating portion 71₃, and the demodulated signals are displayed in reproduction with the picture displaying portion 71₄ so that a passenger can see the picture image program of selected channel.

The number of the optical taps 4₁ through 4ₙ and the branching number of the optical branching units 6 are determined depending upon the level difference between the transmission and reception.

The number of the passenger seat picture image receiving terminals 7₁ through 7ₚ to be connected with the respective O/E portions 5₁ through 5ₙ, 5ₒ₁ through 5ₒₘ depends upon the actual seat arrangement and the electromagnetic environment and is determined individually.

The electric signals, which are related to the picture images and multiplexed in frequency, to be outputted from the head end portion 1 may be one FM-FDM (Frequency Division Multiplexing) signal with, for example, multichannel FM picture image signals being multiplexed in frequency or may be one QAM-FDM signal having the multichannel signals multiplexed in frequency with the respective digital picture image signals being modulated by the QAM system. The tuning and demodulating operations of the channel may be effected by the O/E portions 5₁ through 5ₙ, 5ₒ₁ through 5ₒₘ so as to transmit in a base band signal format the desired picture image signals to the respective passenger seat picture image receiving terminals 7₁ through 7ₚ from the O/E portions 5₁ through 5ₙ, 5ₒ₁ through 5ₒₘ. The tuning and QAM modulating operations of the channel may be effected by the O/E portions 5₁ through 5ₙ, 5ₒ₁ through 5ₒₘ so as to transmit in the digital signal format the desired picture image signals to the respective passenger seat picture image receiving terminals 7₁ through 7ₚ from the O/E portions 5₁ through 5ₙ, 5ₒ₁ through 5ₒₘ. The tuning and QAM demodulating of the channel, and the decode of the digital picture signals may be effected by the O/E portions 5₁ through 5ₙ, 5ₒ₁ through 5ₒₘ so as to transmit in the base band signal format the desired picture image signals to the respective passenger seat picture image receiving terminals 7₁ through 7ₚ from the O/E portions 5₁ through 5ₙ, 5ₒ₁ through 5ₒₘ. Namely, a signal processing function for reproducing the base band picture image signals from the electric signals of the FDM format is roughly divided into the tuning and demodulating operations. When the modulating system is QAM, a processing function of the decode is added to it. Although the three processing functions are taken over by the O/E portions 5₁ through 5ₙ, 5ₒ₁ through 5ₒₘ and the passenger seat picture image receiving terminals 7₁ through 7ₚ, the signal format between the O/E portions 5₁ through 5ₙ, 5ₒ₁ through 5ₒₘ and the passenger seat picture image receiving terminals 7₁ through 7ₚ is determined by the way of the charging operation. The charging way of the processing function is changed by the diversion of the market goods to a module to be used for the respective portions or the new integration of the functions, and is influenced even by the cost, size, suitable connection form.

For instance, when the space for providing the passenger seat picture image receiving terminal 7₁ to 7p within a customer's cabin is limited, it is desirable to give lots of functions as much as possible to the O/E portions 5₁ to 5ₙ, 5₀₁ to 5₀ₘ. Also, for instance, if a conventional by used receiver being able to receive and reproduce FM picture image signals is employed of itself, it is preferable for the O/E portions 5₁ to 5ₙ, 5₀₁ to 5₀ₘ to convert the optical signals into electric signals having proper levels to supply the signals onto the passenger seat picture image receiving terminals 7₁ to 7 p in the form of bus.

On the employment of bus form, it may be transmitted the optical signals of themselves to the passenger seat picture image receiving terminals through the O/E portions 5₁ to 5ₙ, 5₀₁ to 5₀ₘ, or to transmit the frequency multiplexed signals converting in frequency to transmitting frequencies allocated respectively to the passenger seat picture image receiving terminals 7₁ to 7p. At this time, each of the passenger seat picture image receiving terminals 7₁ to 7p is enough for receiving only the signal of frequency allocated to itself. In general, it may be shortened the transmitting path adapted as a form of bus.

Although the connection form between the O/E portions 5₁ through 5ₙ, 5ₒ₁ through 5ₒₘ and the passenger seat picture image receiving terminals 7₁ through 7ₚ is a bus type in the above described embodiment 1, the other type such as a star type may be used. Especially if the signal format in the portion is a base band form, a star form is suitable.

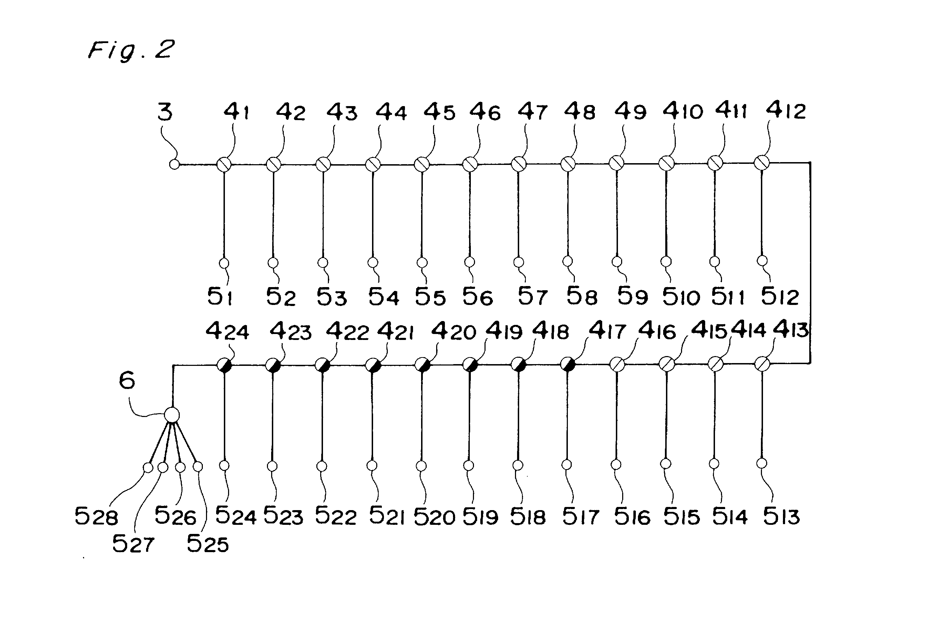

Fig. 2 is an illustrating view in a concrete example of an optical branching operation of the optical fiber transmission path, optical taps 4₁ through 4₁₆ are 20 dB taps, the optical taps 4₁₇ through 4₂₄ are 10 dB taps. The optical branching unit 6 is four branching units. Assume that the loss of the optical taps 4₁ through 4₁₆ which are the 20 dB taps is 22 dB and 0.5 dB including the excess loss, the loss of the optical taps 4₁₇ through 4₂₄ which are 10 dB taps are 11.5 dB and 1 dB including the excessive loss, the loss of per output of the optical branching unit 6 which are 4 branching units is 7 dB including the excess loss . The level difference between the transmission and the reception being 36 dB. An optical connector is provided respectively among the respective optical taps 4₁ through 4₂₄, between the optical taps 4₂₄ and the optical branching unit 6, between the optical tap 4₁ and the optical amplifying portion 3. Assume that the loss thereof is 0.2 dB per one optical connector, and the number of the branches is determined as shown in Fig. 2. Namely, in this example, 28 branches are possible. Assume that four passenger seat picture image receiving terminals 7₁ through 7₄ can be connected respectively with twenty eight O/E portions 5₁ through 5₂₈, and one hundred twelve passenger seat picture receiving terminals can be connected as a whole.

As the types of the components to be used are better to be made less as much as possible in terms of cost and maintenance, three types only are used in the embodiment. As a matter of fact, the number of branches can be increased if more types of optical taps 4₁ through 4ₙ and optical branching units 6 are used in accordance with the optical signal levels of the respective portions. Therefore, the total number of the passenger seat picture image receiving terminals can be increased.

If the branching ratios among the optical taps 4₁ to 4ₙ are proper at the respective positions, the total sum of branchings becomes maximum to be effective, but it needs to prepare many kinds of the optical taps 4₁ to 4ₙ corresponding to the kinds of branching ratios, so that the number of kinds becomes slightly large, and it is necessary to keep always the whole kinds of branchings for exchanging in maintenance at large cost. However, in this embodiment of the present invention, the number of kinds of branching is limited in practical use without any reduction of the property of itself, and it is rendered to present a merit of cost reduction and easy maintenance. In addition, at the time of installing the apparatus it can be reduced the initial cost for the installation in general.

According to the margin in the representative points, there are 13.8 dB in the input end of the O/E portion 5₁, 6.6 dB in the input end of the O/E portion 5₉, 0.3 dB in the input end of the O/E portion 5₁₆, 9. 9 dB in the input end of the O/E portion 5₁₇ 0.1 dB in the input end of the O/E portion 5₂₄, 3. 2 dB in the input end of the O/E portions 5₂₅ through 5₂₈. As the margin is considerably different in location in this manner, it is possible to further increase the number of the whole branches if the optical signal is branched after branching at the respective optical taps 4, through 4₂₄. The example in this case is shown.

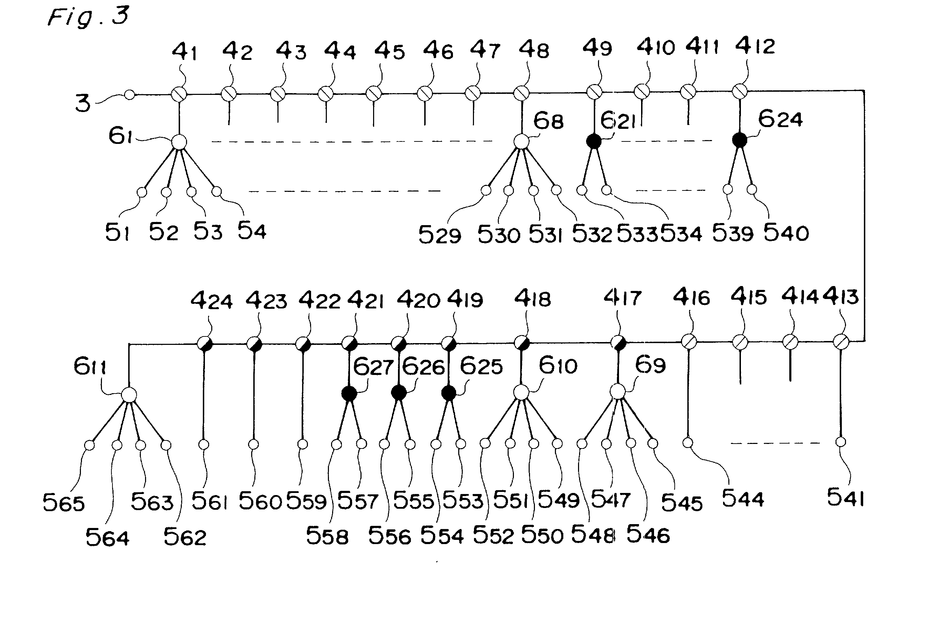

Fig. 3 is an illustrating view in the other concrete example of the optical branches of the optical fiber transmission path. As compared with the example of Fig. 2, optical branching units 6₁ through 6₁₀ composed of four branching units and optical branching units 6₂₁ through 6₂₇ composed of two branching units are added. The loss per output of the optical branching units 6₁ through 6₁₀ composed of four branching units is 7 dB including the excessive loss, the loss per output of the optical branching units 6₂₁ through 6₂₇ composed of two branching units is 3.5 dB including the excessive loss, and the other conditions are the same as in the example shown in Fig. 2 .

Optical branching units 6₁ through 6₁₀ are inserted into the rear stage side of the optical taps 4₁ through 4₈, 4₁₇, 4₁₈, and the optical branching units 6₂₁ through 6₂₇ are inserted into the rear stage side of the optical taps 4₉ through 4₁₂, 4₁₉ through 4₂₁, and sixty five branches can be provided. Assume that four passenger seat picture image receiving terminals 7₁ through 7₄ can be connected respectively with sixty five O/E portions 5₁ through 5₆₅, and two hundred sixty passenger seat picture image receiving terminals can be connected as a whole. As the network construction of the optical fiber transmission path becomes correspondingly complicated in the example, such construction may be provided as described hereinabove if possible, in accordance with the actual condition of the optical fiber laying operation.

As mentioned above, by limiting the kinds of branching in connection with the branching ratio of optical taps 4₁ to 4ₙ it may be caused a large dispersion at random for the optical power branched by the respective taps 4₁ to 4ₙ to generate the loss of power. Accordingly, in the embodiment the optical power is branched at the portion having spare power for branching.

Also, it is an advantage to be able to increase the number of branching, while the main line of optical fiber transmission path is not modified. As the net construction of optical fiber transmission path becomes complicated, it is necessary to decide the whole construction of the apparatus on the consideration of merit of increasing the number of branchings and of the problems for space.

### (Embodiment 2)

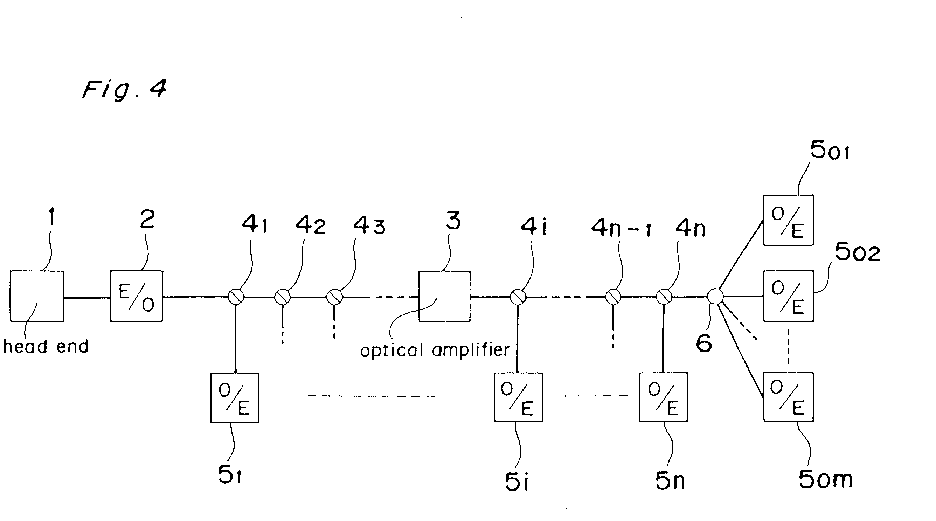

Fig. 4 is a block diagram of a picture image distributing apparatus provided within a passenger moving vehicle in the embodiment 2 of the present invention. As compared with the embodiment 1 shown in Fig. 1, Fig. 4 is different from the construction wherein the optical amplifying portion 3 is provided halfway on the optical fiber transmission path. The passenger seat picture image receiving terminals 7₁ through 7ₚ are omitted in the drawing.

Such construction is adopted when the output of the E/O portion 2 is larger. Especially, the construction is suitable when the output level is too large to place the optical amplifying portion 3 immediately after the E/O portion 2. The inserting position of the optical amplifying portion 3 is determined in the optimum location by the NF characteristics and the gains of the optical amplifying portion 3.

In such construction, two methods of exciting operation are provided when the optical amplifying portion 3 is an optical fiber amplifier. One way is to have an excitation optical power supply in the optical amplifying portion 3, and the other method is to transmit the excitation light till the optical amplifying portion 3 through the transmission path the same in the optical signal from the side of the head end portion 1. There is an advantage that the maintenance becomes easier by the provision of the excitation light source on the side of the head end portion 1. The damping operation of the excitation light can be restrained to minimum if the wavelength dependency where the optical signal is branched, but the excitation light is not branched is adopted in the optical taps 4₁ through 4ₙ.

By employing the optical taps having the property depending on the wavelength, it can be presented advantages such that the optical power for exciting from the light source for optical pumping is used effectively, and the light source for optical pumping is small enough for the output power.

Since the optical power is amplified with providing in halfway of the optical fiber transmission path the optical amplifying portion 3 to amplify the optical power, it is a merit of increasing the number of branching in addition to that, if the optical power is amplified to a proper level, the same type of optical taps as used in the optical fiber transmission path before the optical amplifying portion can be employed even on the proceeding optical fiber transmission path after the optical amplifying portion 3 so that the number of kinds of optical taps can be reduced.

### (Embodiment 3)

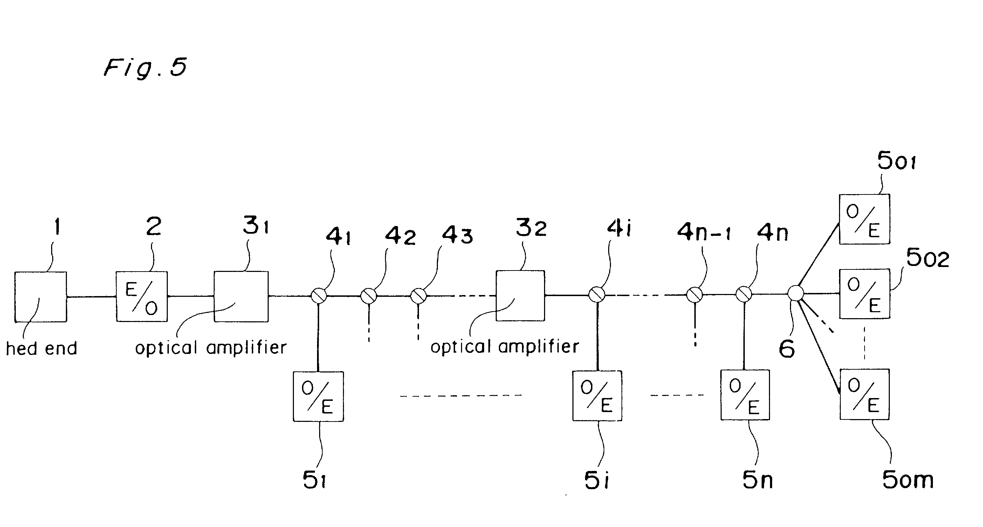

Fig. 5 is a block diagram of a picture image distributing apparatus provided within a passenger moving vehicle in the embodiment of the present invention. Fig. 5 is different from the construction where the optical amplifying portion 3₂ is added as compared with the embodiment 1 shown in Fig. 1. The passenger seat picture image receiving terminals 7₁ through 7ₚ are omitted in the drawing.

Such construction can be adopted when the number of the branches is required to increase more than the embodiment 1. Namely, the optical amplifier portion 3₂ achieves as a function of a repeater. As the optical amplifying portion 3₂ is not noiseless, the number of the repetition stages cannot be increased without limit.

Two exciting methods are provided when the optical amplifying portions 3₁, 3₂ are the optical fiber amplifiers in such construction. One is a method of having an exciting light source, and the other is a method of transmitting the exciting light so far as the optical amplifying portions 3₁, 3₂ through the transmission path the same as in the optical signal from the side of the head end portion 1. As the exciting light source is provided on the side of the head end portion 1, the maintenance has an advantage of becoming easier in operation. If a wavelength dependency where the optical signal is branched, but the exciting light is not branched is adopted in the optical taps 4₁ through 4ₙ, the damping operation of the excitation light can be restrained to minimum.

The third embodiment is a kind of combination of the previous two embodiment so that it has advantages for increasing the number of branching and for supplying the shortage of the optical output power of E/O portion 2 when it is small.

Also, if the light source for optical pumping, which does not contribute to the optical amplifying within the optical amplifying portion 3₁ among the whole light source for optical pumping of the optical amplifying portion 3₁, is transmitted to the optical amplifying portion 3₂ through the optical fiber transmission path, it can be used effectively as the optical power of the light source for optical pumping. Especially, it is more effective to employ the above-mentioned ones depending upon the property of wavelength to the optical taps 4₁ to 4ₙ.

### (Embodiment 4)

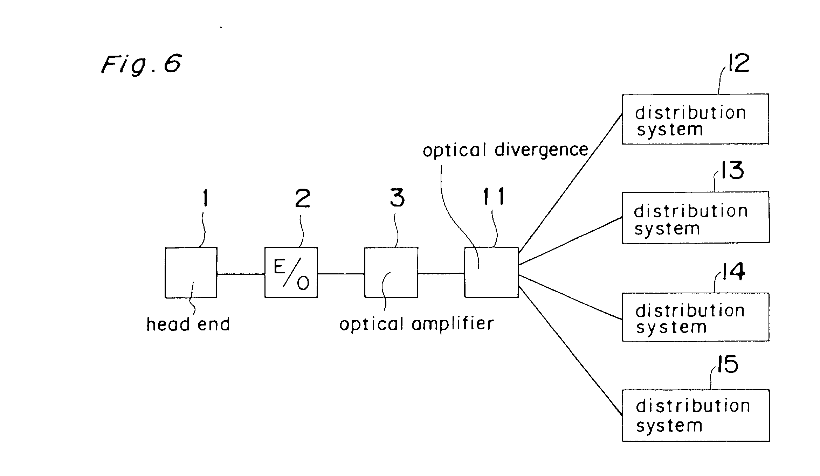

Fig. 6 is a block diagram of a picture image distributing apparatus provided within a passenger moving vehicle in the embodiment 4 of the present invention. The embodiment is adapted to operate in parallel a picture image distributing apparatus provided within a passenger moving vehicle of the above described embodiments 1 through 3. Namely, the output of the optical amplifying portion 3 is branched by the optical branching unit 11 composed of four branching units so as to feed them to the distributing systems 12 through 15. Each of the distributing systems 12 through 15 is shown in Fig. 2 among the distributing system including the optical fiber transmission path through the passenger seat picture receiving terminals 7₁ through 7ₚ in the picture image distributing apparatus provided within the passenger moving vehicle in the above described embodiment 1.

Such construction assumes a passenger plane having the number of much more passenger seats in a lateral direction and a plurality of optical fibers are laid in parallel for each of the respective seat groups in the longitudinal direction so as to set four systems composed of the distributing systems 12 through 15 in parallel. In such a way, the optical fibers and the electric cables for distribution use can be provided without the laying operation in the lateral direction as much as possible so that the fibers and the electric cables for the distributing use do not stride over the aisles.

In the above described embodiment 4, the output is branched at the rear stage of the optical amplifying portion 3, and may be branched anywhere on the rear stage side from the head potion 1. Although the reliability increases as the branching point is closer to the head end portion 1, the cost increases correspondingly, so that the balance thereof has only to be effected.

Although, in the above described embodiment 4, each of the distributing systems 12 through 15 is shown in Fig. 2 among the distributing systems including from the optical fiber transmission path to the passenger seat picture image receiving terminals 7₁ through 7ₚ in the picture image distributing apparatus provided within the passenger moving vehicle in the above described embodiment 1, each of the distributing systems 12 through 15 may be shown in Fig. 2 among the distributing systems including the passenger seat picture image receiving terminals 7₁ through 7ₚ from the optical fiber transmission path in the picture image distributing apparatus provided within the passenger moving vehicle in the above described embodiment 1 or among the distributing systems included from the optical fiber transmission path in the picture image distributing apparatus provided within the passenger moving vehicle in the above described embodiment 2, or among the distributing systems included from the optical fiber transmission path in the picture image distributing apparatus provided the passenger moving vehicle in the above described embodiment 3 to the passenger picture image receiving terminals 7₁ through 7ₚ.

Generally, the customer's cabins of the passenger moving vehicles of large type are spaced with each other by passages of two or three lines, and the setting up the transmission paths crossing over the passages is not preferable at the points of maintenance and reliability thereof. On the contrary, the serial arrangement in the fourth embodiment has an advantage of providing an arrangement without crossing over the passages, which is useful especially in the case of installing the transmission within the wall. Also, when it can be obtained enough for the optical output from the output of optical amplifying portion, it is branched after the optical amplifying portion and designed in serial arrangement to decrease the number of kinds of the optical taps in addition to that the number of the whole branchings increases, which are advantages for this embodiment.

## Claims

1. A picture image distributing apparatus provided within a passenger moving vehicle comprising a head end portion (1) related to picture image signals, and outputting electric signals multiplexed in frequency, an electric optical converting portion (2) for converting into optical signals the electric signals from the above described head end portion (1), an optical amplifying portion (3,3,) for optically amplifying the optical signals from the above described electric optical converting portion (2), one optical fiber transmission path for transmitting the optical signals from the above described optical amplifying portion (3), connected in series with a plurality of optical branching units (4) of non-equal distribution for branching one portion of the optical power of the optical signals, and also, connected in series with an optical branching unit (6) of equal distribution or non-equal distribution for branching the optical power at a final point, a plurality of optical electric converting portions (5) for receiving the optical signals branched at the final point or along the above described optical fiber transmission path, and a passenger seat picture image receiving terminal (7) connected electrically with the above described respective optical electric converting portions (5), and receiving the electric signals from the optical electric converting portions (5).

2. A picture image distributing apparatus according to claim 1, in which the optical amplifying portion (3,3,) is provided between the electrical optical converting portion (2) and the optical fibre transmission path.

3. A picture image distributing apparatus according to claim 1, in which the optical amplifying portion (3) is provided downstream of the optical fibre transmission path for optically amplifying the optical signals damped during the transmission interposed along the optical fiber transmission path, and which further comprises a plurality of passenger picture image receiving terminals (7) are connected electrically by the respective optical electric converting portions (5), each receiving the electric signals from the optical electric converting portions (5).

4. A picture image distributing apparatus according to claim 2, further comprising a second optical amplifying portion (3₂) for optically amplifying the optical signal damped during the transmission interposed along the optical fiber trans-mission path.

5. A picture image distributing apparatus according to any one of the preceding claims, wherein the passenger seat picture image receiving terminal (7) comprises a selecting channel operation portion (71) for passenger to be adapted as a man-machine interface, a tuning portion (71₂) for selec-tively tuning by controlling of the selecting channel operation portion the desired channel from the output electric signal of the optical electric converting portion, a demodulating portion (71₃) for demodulating the tuning selected channel signal, and a picture image displaying portion (71₄) for displaying the demodulated picture image signal.

6. A picture image distributing apparatus according to any one of the preceding claims, wherein the head end portion (1) is arranged to output one FM - FDM signal multiplexed in frequency with respect to a multi-channel FM picture image signal.

7. A picture image distributing apparatus according to claim 6, wherein the passenger seat picture image receiving terminal comprises a selecting channel operation portion for passenger to be adapted as a man-machine interface, and a picture image displaying portion for displaying the demodulated base-band picture image signals, the optical electric converting portions being adapted to tuning and demodulating the desired channel by controlling from the selecting channel operation portion, and the desired signal being transmitted as a format of base-band picture image signal from the optical electric converting portion onto the picture image displaying portion for the respective passenger seat picture image receiving terminal.

8. A picture image distributing apparatus according to any one of claims 1 to 5, wherein the head end portion (1) is arranged to output one QAM - FDM signal multiplexed in frequency with respect to a multi-channel signal being modulated by the respective digital picture image signal in a QAM system.

9. A picture image distributing apparatus according to claim 8, wherein the passenger seat picture image receiving terminal comprises a selecting channel operation portion for passenger to be adapted as a man-machine interface, a decoding portion for decoding the digital picture image signals QAM demodulated, and a picture image displaying portion for displaying the decoded picture image signal, the optical electric converting portion being adapted to tuning of the desired channel and QAM demodulating by controlling from the selecting channel operation portion, and the desired picture image signal being transmitted in a form of digital picture image signals from the optical electric converting portion to the decoding portions of the respective passenger seat picture image receiving terminals.

10. A picture image distributing apparatus according to claim 8, wherein the passenger seat picture image receiving terminal comprises a selecting channel operation portion to be adapted as a man-machine interface, and a picture image displaying portion for displaying a base-band picture image signal, the optical electric converting portion being adapted to tuning of the desired channel, QAM demodulating, and decoding the digital picture image signal by controlling of the selecting channel operation portion, and the desired signal being transmitted in a format of base-band picture image signal from the optical electric converting portion to the picture image displaying portion of the respective passenger seat picture image receiving terminals.

11. A picture image distributing apparatus according to any one of the preceding claims, wherein the or each optical amplifying portion (3) is composed of optical fiber amplifier, the light for excitation use is transmitted through an optical fiber transmission path from the head end side to excite the optical amplifying portion.

12. A picture image distributing apparatus according to claim 110, where an optical branching unit (4) is adapted to have a wave-length dependency where the light for excitation use is not branched.

13. A picture image distributing apparatus as defined in any one of the preceding claims, where the number of kinds of the optical branching units (4, 6) are less in construction than the number of the branches.

14. A picture image distributing apparatus as defined in any one of the preceding claims, wherein at least the transmission paths and optical branching units are located at the wall plane or below the floor of the passenger moving vehicle, and the parts provided after the output point of the optical branching units are located within the customer's cabins of passenger moving vehicle.

## Patentansprüche

1. Bildverteilungsvorrichttung zur Ausstattung in einem Passagiertransportmittel mit einem Kopfendbereich (1) mit Bezug zu Bildsignalen, der in ihrer Frequenz gemultiplexte elektrische Signale ausgibt, einem elektrisch/optischen Konvertierbereich (2) zum Konvertieren der elektrischen Signale des oben genannten Kopfendbereichs (1) in optische Signale, einem optischen Verstärkerbereich (3, 3) zum optischen Verstärken der optischen Signale des oben genannten elektrisch/optischen Konvertierbereichs (2), einem optischen Faserleitungspfad zum Leiten der optischen Signale des oben genannten optischen Verstärkerbereichs (3), welcher mit einer Vielzahl optischer Verzweigungseinheiten mit nicht-gleicher Verteilung in Reihe geschaltet ist, um einen Teil der optischen Leistung der optischen Signale zu verzweigen, und der außerdem mit einer optischen Verzweigungseinheit (6) mit gleicher Verteilung oder nicht-gleicher Verteilung in Reihe geschaltet ist, um die optische Leistung an einem Endpunkt zu verzweigen, einer Vielzahl optisch/elektrischer Konvertierbereiche (5) zum Empfangen der optischen Signale, die am Endpunkt oder entlang des oben beschriebenen optischen Faserleitungspfads abgezweigt worden sind, sowie einem Bildempfangsterminal (7) für Passagiersitze, das elektrisch mit den jeweiligen, oben genannten optisch/elektrischen Konvertierbereichen (5) verbunden ist und das die elektrischen Signale von den optisch/elektrischen Konvertierbereichen (5) empfängt.

2. Bildverteilungsvorrichtung nach Anspruch 1, wobei der optische Verstärkerbereich (3, 3,) zwischen dem elektrisch/optischen Konvertierbereich (2) und dem optischen Faserleitungspfad angeordnet ist.

3. Bildverteilungsvorrichtung nach Anspruch 1, wobei der optische Verstärkungsbereich (3) stromabwärts des optischen Faserleitungspfads angeordnet ist, um die optischen Signale optisch zu verstärken, welche während der entlang des optischen Faserleitungspfads zwischengeschalteten Leitung gedämpft worden sind, und der weiterhin eine Vielzahl von Bildempfangsterminals (7) für Passagiere aufweist, die mittels der jeweiligen optisch/elektrischen Konvertierbereiche (5) verbunden sind, wobei jeder die elektrischen Signale von den optisch/elektrischen Konvertierbereichen (5) empfängt.

4. Bildverteilungsvorrichtung nach Anspruch 2 zusätzlich mit einem zweiten optischen Verstärkungsbereich (3₂) zur optischen Verstärkung der optischen Signale, welche während der entlang des optischen Faserleitungspfads zwischengeschalteten Leitung gedämpft worden sind.

5. Bildverteilungsvorrichtung nach einem der vorhergehenden Ansprüche, wobei das Bildempfangsterminal (7) für Passagiersitze einen Kanalauswahl-Bedienungsbereich (71) für Passagiere aufweist, der als Mensch-Maschine-Schnittstelle eingerichtet ist, einen Abstimmungsbereich (71₂) zum wahlweisen Abstimmen des gewünschten Kanals durch Steuern des Kanalauswahl-Bedienungsbereichs aus dem elektrischen Ausgabesignal des optisch/elektrischen Konvertierbereichs, einem Demodulierbereich (71₃) zum Demodulieren des Abstimmsignals des ausgewählten Kanals, sowie einem Bilddarstellungsbereich (71₄) zum Darstellen des demodulierten Bildsignals.

6. Bildverteilungsvorrichtung nach einem der vorhergehenden Ansprüche, wobei der Kopfendbereich (1) für die Ausgabe eines in seiner Frequenz gemultiplexten FM -FDM-Signals mit Bezug auf ein Mehrkanal-FM-Bildsignal eingerichtet ist.

7. Bildverteilungsvorrichung nach Anspruch 6, wobei das Bildempfangsterminal für Passagiersitze einen Kanalauswahl-Bedienungsbereich für Passagiere aufweist, der als Mensch-Maschine-Schnittstelle eingerichtet ist, sowie einen Bilddarstellungsbereich zum Darstellen des demodulierten Basisband-Bildsignals, wobei die optisch/elektrischen Konvertierbereiche zum Abstimmen und Demodulieren des gewünschten Kanals durch Steuerung aus dem Kanalauswahl-Bedienungsbereichs eingerichtet sind, und wobei das gewünschte Signal als ein Format eines Basisband-Bildsignals aus dem optisch/elektrischen Konvertierbereich an den Bilddarstellungsbereich des jeweiligen Bildempfangsterminals für Passagiersitze übermittelt wird.

8. Bildverteilungsvorrichtung nach einem der Ansprüche 1 bis 5, wobei der Kopfendbereich (1) zur Ausgabe eines QAM - FDM-Signals eingerichtet ist, welches in seiner Frequenz mit Bezug auf ein Mehrkanalsignal gemultiplext ist, das durch das jeweilige digitale Bildsignal in einem QAM-System moduliert ist.

9. Bildverteilungsvorrichung nach Anspruch 8, wobei das Bildempfangsterminal für Passagiersitze einem Kanalauswahl-Bedienungsbereich für Passagiere aufweist, der als Mensch-Maschine-Schnittstelle eingerichtet ist, einem Decodierbereich zum Decodieren des digitalen, QAM-demodulierten Bildsignals, sowie einen Bilddarstellungsbereich zum Darstellen des decodierten Bildsignals, wobei der optisch/elektrische Konvertierbereich zum Abstimmen des wünschten Kanals und zum QAM-Demodulieren durch Steuern aus dem Kanalauswahl-Bedienungsbereich eingerichtet ist und wobei das gewünschte Bildsignal in einer Form eines digitalen Bildsignals aus dem optisch/elektrischen Konvertierbereich an die Decodierbereiche der jeweiligen Bildempfangsterminals für Passagiersitze übermittelt wird.

10. Bildverteilungsvorrichtung nach Anspruch 8, wobei das Bildempfangsterminal für Passagiersitze einen Kanalauswahl-Bedienungsbereich als Mensch-Maschine-Schnittstelle aufweist, sowie einen Bilddarstellungsbereich zum Darstellen eines Basisband-Bildsignals, wobei der optisch/elektronische Konvertierbereich zum Abstimmen des gewünschten Kanals, QAM-demodulieren und decodieren des digitalen Bildsignals durch Steuern des Bildauswahl-Bedienungsbereichs eingerichtet ist und wobei das gewünschte Signal in einem Format eines Basisband-Bildsignals aus dem optisch/elektrischen Konvertierbereich an den Bilddarstellungsbereich des jeweiligen Bildempfangsterminals für Passagiersitze übermittelt wird.

11. Bildverteilungsvorrichtung nach einem der vorhergehenden Ansprüche, wobei der oder jeder optische Verstärkungsbereich (3) aus optischem Faserverstärker zusammengesetzt ist, wobei das Licht zur Verwendung als Versorgung durch einen optischen Faserleitungspfad von der Kopfendenseite übermittelt wird, um den optischen Verstärkungsbereich zu versorgen.

12. Bildverteilungsvorrichtung nach Anspruch 11, wobei eine optische Verzweigungseinheit (4) so eingerichtet ist, daß eine Wellenlängen-Abhängigkeit besteht, bei der das Licht zur Verwendung als Versorgung nicht abgezweigt wird.

13. Bildverteilungsvorrichtung nach einem der vorhergehenden Ansprüche, wobei die Anzahl der Arten der optischen Verzweigungseinheiten (4, 6) in konstruktiver Hinsicht geringer ist als die Anzahl der Zweige.

14. Bildverteilungsvorrichtung nach einem der vorhergehenden Ansprüche, wobei mindestens die Leitungspfade und die optischen Verzweigungseinheiten in der Wandebene oder unterhalb des Fußbodens des Passagiertransportmittels angeordnet sind und wobei die Teile hinter dem Ausgabepunkt der optischen Verzweigungseinheiten innerhalb der Fahrgastkabinen des Passagiertransportmittels angeordnet sind.

## Revendications

1. Appareil pour la distribution d'images de film vidéo prévu dans un véhicule de transport de passagers comprenant une partie d'extrémité de tête (1) relative à des signaux d'images de film vidéo, et émettant des signaux électriques multiplexés en fréquence, une partie pour la conversion électrique/optique (2) destinée à convertir en signaux optiques les signaux électriques provenant de la partie d'extrémité de tête définie ci-dessus (1), une partie d'amplification optique (3,3) destinée à amplifier optiquement les signaux optiques provenant de la partie de conversion électrique/optique définie ci-dessus (2), un parcours de transmission par fibre optique destiné à transmettre les signaux optiques depuis la partie d'amplification optique définie ci-dessus (3), connecté en série à une pluralité d'unités de ramifications optiques (4) de distribution non équivalente pour ramifier une partie de la puissance optique des signaux optiques, et de même, il est connecté en série à une unité de ramification optique (6) de distribution équivalente ou de distribution non équivalente pour ramifier la puissance optique à un point final, une pluralité de parties de conversion optique/électrique (5) destinées à recevoir les signaux optiques ramifiés au point final ou le long du parcours de transmission par fibre optique défini ci-dessus, et un terminal de réception d'images de film vidéo de siège de passager (7) connecté électriquement aux parties de conversion optique/électrique correspondantes définies ci-dessus (5) et recevant les signaux électriques provenant des parties de conversion optique/électrique (5).

2. Appareil pour la distribution d'images de film vidéo selon la revendication 1, dans lequel la partie d'amplification optique (3,3) est prévue entre la partie de conversion électrique/optique (2) et le parcours de transmission par fibre optique.

3. Appareil pour la distribution d'images de film vidéo selon la revendication 1, dans lequel la partie d'amplification optique (3) est prévue en aval du parcours de transmission par fibre optique pour amplifier optiquement les signaux optiques atténués durant la transmission, est intercalée le long du parcours de transmission par fibre optique, et lequel comprend en outre une pluralité de terminaux de réception d'images de film vidéo de siège de passager (7) qui sont connectés électriquement aux parties de conversion optique/électrique correspondantes (5), chacune recevant les signaux électriques provenant de la partie de conversion optique/électrique (5).

4. Appareil pour la distribution d'images de film vidéo selon la revendication 2, comprenant en outre une seconde partie d'amplification optique (3₂)destinée à amplifier optiquement le signal optique atténué durant la transmission, qui est intercalée le long du parcours de transmission par fibre optique.

5. Appareil pour la distribution d'images de film vidéo selon l'une quelconque des revendications précédentes, dans lequel le terminal de réception d'images vidéo de siège de passager (7) comprend une partie de sélection de canal (71) destinée au passager pour être appropriée en tant qu'interface homme-machine, une partie de réglage (71₂) destinée au réglage sélectif en commandant à la partie de sélection de canal le canal souhaité provenant du signal électrique émis par la partie de conversion optique/électrique, une partie de démodulation (71₃) destinée à démoduler le signal réglé du canal sélectionné, et une partie de visualisation d'images de film vidéo (71₄) destinée à visualiser le signal d'images de film vidéo démodulé.

6. Appareil pour la distribution d'images vidéo selon l'une quelconque des revendications précédentes, dans lequel la partie d'extrémité de tête (1) est aménagée pour émettre un signal FM - FDM multiplexé en fréquence par rapport à un signal d'images de film vidéo FM à canal multiple.

7. Appareil pour la distribution d'images de film vidéo selon la revendication 6, dans lequel le terminal de réception d'images de film vidéo de siège de passager comprend une partie de sélection de canal destinée au passager devant être appropriée en tant qu'interface homme-machine, et une partie de visualisation d'images de film vidéo pour visualiser les signaux d'images de film vidéo démodulés en bande de base, les parties de conversion optique/électrique étant adaptées pour régler et démoduler le canal souhaité en commandant la partie de sélection de canal, le signal souhaité étant transmis comme un format de signal d'images de film vidéo à bande de base depuis la partie de conversion optique/électrique jusqu'à la partie de visualisation d'images de film vidéo du terminal de réception d'images de film vidéo de siège de passager correspondant.

8. Appareil pour la distribution d'images vidéo selon l'une quelconque des revendications 1 à 5, dans lequel la partie d'extrémité de tête (1) est aménagée pour émettre un signal QAM - FDM multiplexé en fréquence par rapport à un signal à canal multiple qui est modulé par le signal d'images de film vidéo numérique correspondant du système QAM.

9. Appareil pour la distribution d'images de film vidéo selon la revendication 8, dans lequel le terminal de réception d'images de film vidéo de siège de passager comprend une partie de sélection de canal destinée au passager pour être appropriée en tant qu'interface homme-machine, une partie de décodage pour décoder les signaux numériques d'images de film vidéo démodulés QAM, et une partie de visualisation de l'image de film vidéo pour visualiser le signal d'images de film vidéo décodé, la partie de conversion optique/électrique étant adaptée au réglage du canal souhaité et à la démodulation QAM en commandant la partie de sélection de canal, et le signal d'images de film vidéo souhaité étant transmis sous la forme de signaux d'images de film vidéo numériques depuis la partie de conversion optique-électrique jusqu'aux parties de décodage des terminaux de réception d'images de film vidéo de siège de passager.

10. Appareil pour la distribution d'images de film vidéo selon la revendication 8, dans lequel le terminal de réception d'images de film vidéo de siège de passager comprend une partie de sélection de canal pour être appropriée en tant qu'interface homme-machine, et une partie de visualisation de l'image de film vidéo destinée à visualiser un signal d'images de film vidéo à bande de base, la partie de conversion optique/électrique étant adaptée au réglage du canal souhaité, à la démodulation QAM, et décodant le signal numérique d'images de film vidéo en commandant la partie de sélection de canal, et le signal souhaité étant transmis selon un format de signal d'images de film vidéo à bande de base depuis la partie de conversion optique/électrique jusqu'à la partie de visualisation de l'image vidéo des terminaux de réception d'images de film vidéo de siège de passager correspondant.

11. Appareil pour la distribution d'images vidéo selon l'une quelconque des revendications précédentes, dans lequel la partie d'amplification optique (3) ou chacune de celles-ci est constituée d'un amplificateur à fibre optique, la lumière destinée à l'excitation est transmise à travers un parcours de transmission par fibre optique depuis le côté d'extrémité de tête pour exciter la partie d'amplification optique.

12. Appareil pour la distribution d'images de film vidéo selon la revendication 11, dans lequel une unité de ramification optique (4) est adaptée pour avoir une dépendance de longueur d'onde lorsque la lumière destinée à l'excitation n'est pas ramifiée.

13. Appareil pour la distribution d'images de film vidéo selon l'une quelconque des revendications précédentes, dans lequel le nombre de types d'unité de ramification optique (4,6) est inférieur, dans la structure, au nombre des ramifications.

14. Appareil pour la distribution d'images de film vidéo selon l'une quelconque des revendications précédentes, dans lequel au moins les parcours de transmission et les unités de ramification optique sont situées au niveau du plan de cloison ou en dessous du plancher du véhicule transportant des passagers, et dans lequel les parties prévues après le point d'émission des unités de ramification optique sont situées à l'intérieur des cabines des clients du véhicule transportant des passagers.
